# EUROPÄISCHE PATENTSCHRIFT

(11) **EP 2 349 768 B1**
(45) Veröffentlichungstag und Bekanntmachung des Hinweises auf die Patenterteilung: **21.02.2018**
(21) Anmeldenummer: 09783805.6
(22) Anmeldetag: 07.10.2009
(51) Int. Cl.: B60K 6/365, B60K 6/48, B60K 6/547

(54) **HYBRIDANTRIEBSEINRICHTUNG**
HYBRID DRIVETRAIN EQUIPMENT
ÉQUIPMENT POUR LA PROPULSION HYBRIDE

(30) Priorität: 31.10.2008 DE 102008043367
(43) Veröffentlichungstag der Anmeldung: 03.08.2011
(73) Patentinhaber: Robert Bosch GmbH, 70442 Stuttgart (DE)
(72) Erfinder: ESSE, Paul, 71397 Leutenbach (DE); RUIZ DE LARRAMENDI, Miguel, 70180 Stuttgart (DE)
(86) Internationale Anmeldenummer: PCT/EP2009/063011
(87) Internationale Veröffentlichungsnummer: WO 2010/049244

(56) Entgegenhaltungen:
- EP-A1- 0 337 032
- EP-A2- 1 049 235
- WO-A1-2007/094350
- US-A- 5 415 603
- US-A1- 2004 124 722
- US-A1- 2005 206 251
- US-B1- 6 450 785

## Beschreibung

Die vorliegenden Erfindung betrifft eine Elektromaschine gemäß dem Oberbegriff des Anspruches 1.

### Stand der Technik

Hybridantriebseinrichtungen mit einer Verbrennungskraftmaschine und einer Elektromaschine werden beispielsweise eingesetzt, um Kraftfahrzeuge anzutreiben. Die als Motor und Generator fungierenden Elektromaschine in dem Kraft-fahrzeug weist eine Achse oder Welle mit einem daran angeordnete Stator oder Rotor auf. Der Stator oder Rotor gibt Abwärme an die Achse- oder Welle aus Metall ab. Besonders bei einem oberen Drehzahlbereich der Hybridantriebseinrichtung treten große Abwärmemengen auf, so dass ein dauerhafter Betrieb der Hybridantriebseinrichtung in diesem Drehzahlbereich nur bei einer ausreichenden Kühlung des auf der Achse oder Welle angeordneten Stators oder Rotors gewährleistet ist. Es ist bereits bekannt, die Achse oder Welle als Hohlachse oder Hohlwelle auszuführen.

Die WO 2005/116449 A1 zeigt einen hermetisch abgedichteten Kompressor in einem abgedichteten Behälter für Haushaltskühlschränke oder -gefriertruhen. Zur Reduzierung des Verbrauches an elektrischer Energie und für eine Verringerung der Geräuschemissionen befindet sich in dem Behälter Öl mit einer geringen Viskosität. Eine Hohlwelle wird beispielsweise mit einer Rotationsfrequenz von 20 Hz bewegt, um das Öl zu fördern. Am unteren Ende der vertikal ausgerichteten Hohlwelle ist eine erste als Zentrifugalpumpe ausgebildete Pumpe vorhanden. Spiralförmig Rillen an der Innenseite der Hohlwelle dienen als zweite und dritte Pumpe zur Fördern des Öl in der Hohlwelle nach oben, um eine äußere Oberfläche der Hohlwelle als Hauptwelle und eines Lagers zu schmieren.

Aus der JP 2006-230154 ist eine Elektromaschine mit einer Hohlachse und einem an der Hohlachse angeordneten Stator bekannt. Um den stationären Stator rotiert ein Rotor mittels einer Lagerung auf der Hohlachse. Ein Gebläse fördert Luft zur Kühlung durch die Hohlachse, um die Hohlachse und den Stator zu kühlen.

Aus der gattungsbildenden WO 2007/094350 A1 ist eine Elektromaschine bekannt, an deren Hohlwelle an der Innenwand radial nach innen vorstehende, rippenförmige Vorsprünge vorgesehen sind, die sich in axialer Richtung erstrecken. Diese Vorsprünge erzeugen eine Turbulenz in dem durch die Hohlwelle strömenden Fluid und erhöhen die Wärmeübertragungsfläche. Sie fördern jedoch kein Kühlfluid in axialer Richtung der Hohlwelle, da sie dem Kühlfluid keinen Impuls in axialer Richtung geben können.

### Offenbarung der Erfindung

### Vorteile der Erfindung

Die erfindungsgemäße Elektromaschine, insbesondere zum Antrieb des Kraftfahrzeuges, umfasst eine Hohlwelle, wenigstens einen an der Hohlwelle angeordneten Rotor, eine Hohlachse und wenigstens einen an der Hohlachse angeordneten Stator, wobei wenigstens ein Mittel zum Fördern eines Kühlfluides, insbesondere Luft, durch die Hohlwelle vorgesehen ist, um den Rotor zu kühlen. In besonders vorteilhafter und einfacher Weise wird damit die Wärme aus einem Innenraum der Hohlwelle durch Konvektion, d. h. Massetransport, durch das Kühlfluid, insbesondere Luft, abgeleitet und dadurch die Kühlleistung wesentlich verbessert. Die Hybridantriebseinrichtung kann damit über einen längeren Zeitraum mit hohen Drehzahlen sicher und zuverlässig betrieben werden, ohne dass die Gefahr von Störungen besteht.

Erfindungsgemäß ist das wenigstens eine Mittel zum Fördern des Kühlfluides mit der Hohlwelle verbunden, so dass eine Rotationsbewegung der Hohlwelle eine Rotationsbewegung der wenigstens einen Schaufel bedingt. Ein zusätzliches Laufrad sowie ein Antriebsmotor für die Schaufeln wird somit nicht benötigt, weil die rotierende Hohlwelle als Laufrad für die Schaufeln dient.

Außerdem ist das wenigstens eine Mittel zum Fördern des Kühlfluides erfindungsgemäß an einer Innenseite der Hohlwelle ausgebildet.

In einer erfindungsgemäßen Ausführungsform ist die wenigstens eine Schaufel als ein Gewinde oder eine Schnecke an der Innenseite der Hohlwelle ausgebildet.

Insbesondere ist das Gewinde oder die Schnecke einteilig mit einer Hohlwelle ausgebildet ist. Dadurch wird kein zusätzliches Bauteil benötigt.

In einer Variante ist die Hohlwelle innenseitig mit Kühlrippen versehen. Damit kann die Wärmeübertragung von der Innenseite der Hohlwelle auf das Kühlfluid, insbesondere Luft, verbessert und damit die Kühlleistung erhöht werden.

### Kurze Beschreibung der Zeichnungen

Im Nachfolgenden werden drei Ausführungsbeispiele der Erfindung unter Bezugnahme auf die beigefügten Zeichnungen näher beschrieben. Es zeigt:
- Fig. 1: eine stark schematisierte Darstellung einer Hybridantriebseinrichtung,
- Fig. 2: einen Längsschnitt einer Elektromaschine in einer ersten Ausführungsform,
- Fig. 3: einen Schnitt A-A einer Hohlwelle der Elektromaschine gemäß Fig. 2,
- Fig. 4: einen Längsschnitt der Elektromaschine in einer zweiten Ausführungsform,
- Fig. 5: einen Längsschnitt der Elektromaschine in einer nicht erfindungsgemäßen Ausführungsform und
- Fig. 6: eine stark schematisierte Ansicht eines Kraftfahrzeuges.

### Ausführungsformen der Erfindung

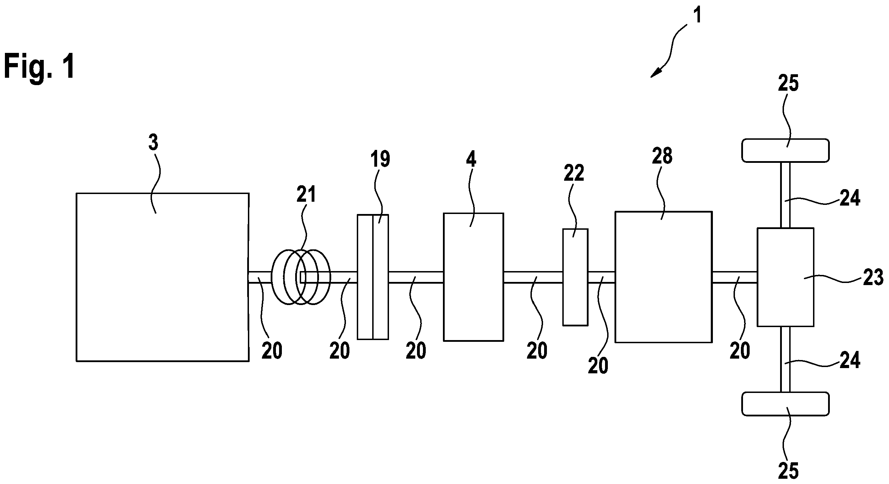

In Fig. 1 ist eine Hybridantriebseinrichtung 1 für ein Kraftfahrzeug 2 dargestellt. Die Hybridantriebseinrichtung 1 für ein Kraftfahrzeug 2 umfasst eine Verbrennungskraftmaschine 3 sowie eine Elektromaschine 4, die als Motor und Generator fungiert, jeweils zum Antreiben oder Verzögern des Kraftfahrzeuges 2. Die Verbrennungskraftmaschine 3 und die Elektromaschine 4 sind mittels einer Antriebswelle 20 miteinander verbunden. Die mechanische Koppelung zwischen der Verbrennungskraftmaschine 3 und der Elektromaschine 4 kann mittels einer Kupplung 19 hergestellt und aufgehoben werden. Ferner ist in der Antriebswelle 20, welche die Verbrennungskraftmaschine 3 und die Elektromaschine 4 miteinander koppelt, eine Elastizität 21 angeordnet. Die Elektromaschine 4 ist mit einem Differentialgetriebe 23 mechanisch gekoppelt. In der Antriebswelle 20, welche die Elektromaschine 4 und das Differentialgetriebe 23 miteinander verbindet, ist ein Wandler 22 und ein Getriebe 28 angeordnet. Mittels des Differentialgetriebes 23 werden über die Radachsen 24 die Antriebsräder 25 angetrieben.

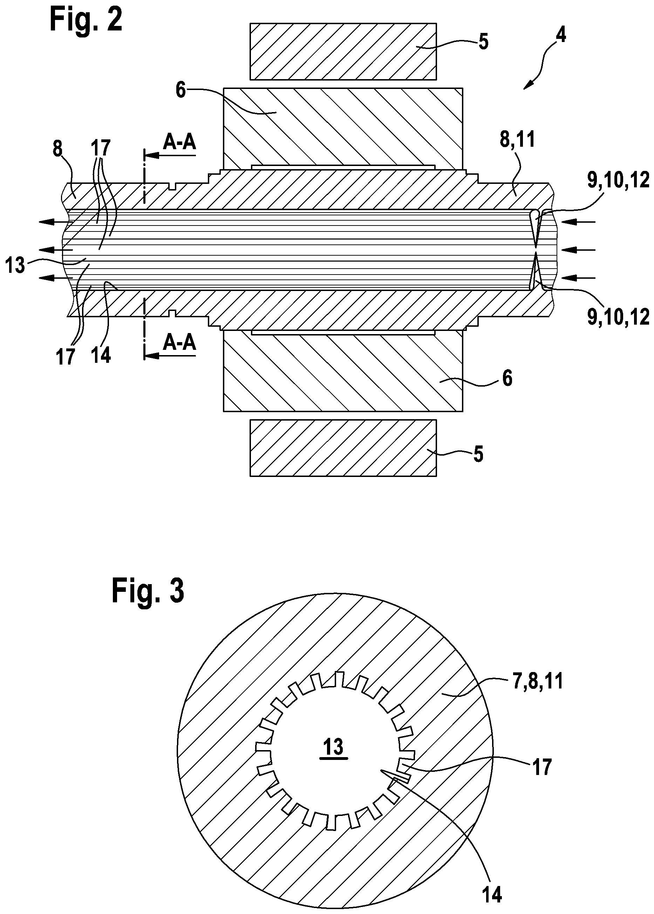

Fig. 2 zeigt die Elektromaschine 4 für die Hybridantriebseinrichtung 1 als Innenpolmaschine in einer ersten Ausführungsform mit einem feststehenden Stator 5 und einem rotierenden Rotor 6 der Hybridantriebseinrichtung 1 in einer stark vereinfachten Darstellung, so dass beispielsweise elektrische Leitungen, die Wicklungen des Stators 5 und des Rotors 6, Lager und Fixierungsmittel für den Stator 5 nicht dargestellt sind. Eine von einem nicht dargestellten Lager gelagerte Hohlwelle 8 mit einem Außendurchmesser von vorzugsweise 180 mm und einem Innendurchmesser von vorzugsweise 120 mm ist an einer Außenseite mit dem Rotor 6 versehen. Die Hohlwelle 8 besteht aus Metall, z. B. Stahl. Konzentrisch um den Rotor 6 ist der Stator 5 angeordnet, der mittels nicht dargestellter Fixierungsmittel, z. B. ein Gehäuse, nicht beweglich befestigt ist. Die Hohlwelle 8 ist dabei innerhalb der Hybridantriebseinrichtung 1 mit der Antriebswelle 20 der Hybridantriebseinrichtung 1 verbunden bzw. stellt einen Teil der Antriebswelle 20 dar.

Bei einem Betrieb der Hybridantriebseinrichtung 1 in einem höheren Drehzahlbereich, beispielsweise im Bereich von 6.000 U/min, treten an dem Rotor 6 größere Mengen an Abwärme auf, welche mittels Wärmeleitung zu der Hohlwelle 8 übertragen werden. Um die Hybridantriebseinrichtung 1 auch über einen längeren Zeitraum, z. B. mehr als 5 min, betreiben zu können ist eine ausreichende Kühlung des Rotors 6 und der Hohlwelle 8 erforderlich. Hierzu ist die Elektromaschine 4 mit einem Mittel 9 zum Fördern von Luft als Kühlfluid durch einen Innenraum 13 der Hohlwelle 8 versehen, das als eine Strömungsmaschine 10 ausgebildet ist. Anstelle einer Strömungsmaschine 10 könnte auch eine Kolbenmaschine genutzt werden (nicht dargestellt). Die Strömungsmaschine 10 umfasst mehrere Schaufeln 12 als Teile 12 der Strömungsmaschine 10, die innerhalb des Innenraumes 13 an einer Innenseite 14 der Hohlwelle 8 befestigt sind. Die Hohlwelle 8 stellt damit auch ein Laufrad 11 für die Schaufeln 12 dar. Aufgrund der rotierenden Schaufeln 12 wirken Strömungskräfte zwischen der Luft und den Schaufeln 12, so dass die Luft durch den Innenraum 13 der Hohlwelle 8 entsprechend der in Fig. 2 mit Pfeilen dargestellten Strömungsrichtung gefördert wird. Die hohe Wärmeleitfähigkeit der metallischen Hohlwelle 8 bewirkt, dass sich die von dem Rotor 6 abgegebene Abwärme gut zu einer Innenseite 14 der Hohlwelle 8 geleitet wird. Von der Innenseite 14 der Hohlwelle 8 wird die Wärme auf die Luft als Kühlfluid mittels Wärmeleitung und/oder Wärmestrahlung übertragen. Die auf die Luft übertragene Wärme wird von der strömenden Luft mittels Wärmekonvention aus dem Innenraum 13 der Hohlwelle 8 heraus in die Umgebung geleitet. Zur Erhöhung der Wärmeleitung und/oder Wärmestrahlung von der Innenseite 14 der Hohlwelle 8 auf die Luft sind an der Innenseite 14 der Hohlwelle 8 Kühlrippen 17 (Fig. 3) vorhanden, die die Oberfläche der Innenseite 14 zu vergrößern.

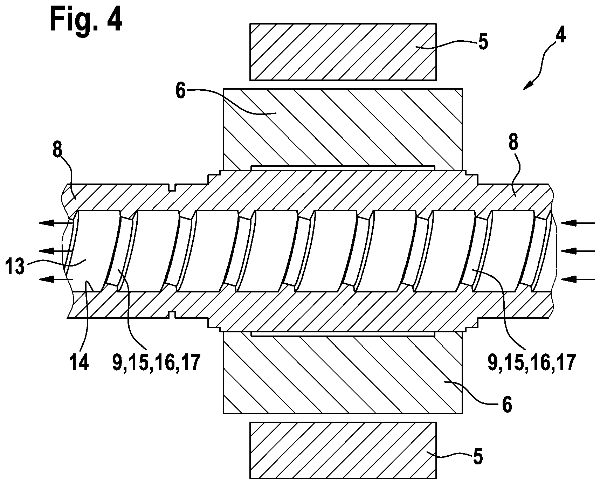

Fig. 4 zeigt die Elektromaschine 4 für die Hybridantriebseinrichtung 1 in einer zweiten Ausführungsform mit dem Stator 5 und dem Rotor 6 der Hybridantriebseinrichtung 1 in eine stark vereinfachten Darstellung. Im Nachfolgenden werden im Wesentlichen nur die Unterschiede zu der ersten Ausführungsform gemäß Fig. 2 dargestellt. Als Mittel 9 zum Fördern der Luft durch den Innenraum 13 der Hohlwelle 8 werden anstelle der Schaufeln 12 ein Gewinde 15 oder eine Schnecke 16 an der Innenseite 14 der Hohlwelle 8 verwendet. Das Gewinde 15 oder die Schnecke 16 fördert die Luft als Kühlfuid durch den Innenraum 13 der Hohlwelle 8, um den Rotor 6 zu kühlen. Das Gewinde 15 bzw. die Schecke 16 wirken dabei auch als Kühlrippen 17, so dass dadurch die Kühlleistung zusätzlich erhöht werden kann. Das Gewinde 15 oder die Schnecke 16 kann beim Urformen oder nachgeordneten Herstellungsschritten, z. B. beim Gießen oder Strangpressen, der Hohlwelle 8 einteilig mit der Hohlwelle 8 ausgebildet werden oder als zusätzliches Bauteil, z. B. ein Einsatz, in die Hohlwelle 8 eingesetzt werden.

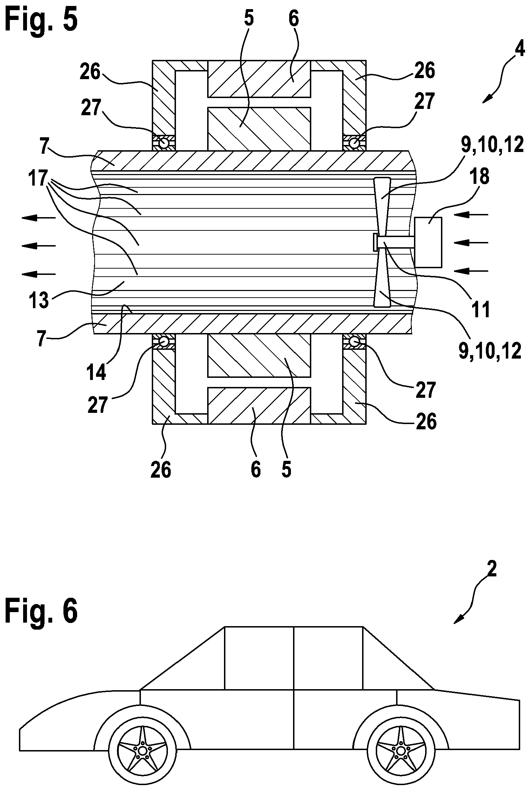

In Fig. 5 ist die Elektromaschine 4 für die Hybridantriebsenrichtung 1 als eine Außenpolmaschine in einer nicht erfindungsgemäßen Ausfuhrüngsform mit einem Stator 5 und einem Rotor 6 der Hybridantriebseinrichtung 1 in eine stark vereinfachten Darstellung abgebildet. Im Nachfolgenden werden im Wesentlichen nur die Unterschiede zu der ersten Ausführungsform gemäß Fig. 2 dargestellt. Anstelle einer rotierenden Hohlwelle 7 wird eine feststehende bzw. unbewegliche Hohlachse 7 aus Metall, z. B. Stahl, genutzt, auf dessen Außenseite der feststehende Stator 5 angeordnet ist. Unter Hohlachse 7 werden Teile verstanden, auf denen ein Stator 5 befestigt werden kann und die einen Kanal zum Durchleiten des Kühlfuides aufweisen. Ein rotierendes Gehäuse 26 ist mittels eines Lagers 27 an der feststehenden Hohlachse 7 gelagert und mit der Antriebswelle 20 der Hybridantriebseinrichtung 1 verbunden (nicht dargestellt). Das Gehäuse 26 ist mit dem Rotor 6 verbunden zur Fixierung des Rotors 6. Zur Kühlung des Stators 5 auf der Hohlachse 7 sind in dem Innenraum 13 der Hohlachse 7 auf dem Laufrad 11 Schaufeln 12 angeordnet. Ein elektrischer Antriebsmotor 18 versetzt das Laufrad 11 und damit auch die Schaufeln 12 in eine Rotationsbewegung, um Luft als Kühlfluid durch die Hohlachse 7 zu leiten. Kühlrippen 17 an der Innenseite 13 der Hohlwelle 7 verbessern die Kühlleistung der Luft. Vorzugsweise kann von wenigstens einem nicht dargestellten Temperatursensor die Temperatur an dem Stator und/oder der Hohlachse 7 erfasst werden und mittels einer nicht dargestellten Steuerungseinheit wird der Antriebsmotor 18 nur eingeschaltet, wenn ein bestimmter vorgegebener Temperaturwert an dem Stator 5 und/oder der Hohlachse 7 überschritten wird.

Die Einzelheiten der verschiedenen Ausführungsbeispiele können miteinander kombiniert werden, sofern nichts Gegenteiliges erwähnt wird.

Insgesamt betrachtet sind mit der Hybridantriebseinrichtung 1 wesentliche Vorteile verbunden. Die Kühlung des Rotors 6 wird mit einfachen Mittel 9 ausgeführt, so dass bei geringen Herstellungskosten der Hybridantriebseinrichtung 1 eine effektive Kühlung möglich ist. Die Hybridantriebseinrichtung 1 kann damit auch über längere Zeiträume in einem hohen Drehzahlbereich betrieben werden.

## Patentansprüche

1. Elektromaschine (4), insbesondere zum Antrieb eines Kraftfahrzeuges (2), mit einer Hohlwelle (8) und wenigstens einem an der Hohlwelle (8) angeordneten Rotor (6) und wenigstens einem um den Rotor (6) angeordneten feststehenden Stator (5), wobei wenigstens ein Mittel (9) zum Fördern eines Kühlfluides, insbesondere Luft, durch die Hohlwelle (8) vorgesehen ist, um den Rotor (6) zu kühlen, **dadurch gekennzeichnet, dass** das Mittel (9) an einer Innenseite (14) der Hohlwelle (8) ausgebildet oder befestigt und als Schaufel (12), Gewinde (15) oder Schnecke (16) ausgeführt ist.

2. Elektromaschine nach Anspruch 1, **dadurch gekennzeichnet, dass** das Gewinde (15) oder die Schnecke (16) oder die wenigstens eine Schaufel (12) einteilig mit der Hohlwelle (8) ausgebildet ist.

3. Elektromaschine nach Anspruch 1, **dadurch gekennzeichnet, dass** die Hohlachse (7) oder Hohlwelle (8) innenseitig mit Kühlrippen (17) versehen ist.

4. Elektromaschine nach Anspruch 1, **dadurch gekennzeichnet, dass** die Hohlwelle (8) als Laufrad (11) fungiert und die wenigstens eine Schaufel (12) als Schaufel einer Strömungsmaschine ausgeführt ist.

## Claims

1. Electric machine (4), in particular for driving a motor vehicle (2), having a hollow shaft (8) and having at least one rotor (6) which is arranged on the hollow shaft (8) and having at least one fixed stator (5) which is arranged around the rotor (6), wherein at least one means (9) for delivering a cooling fluid, in particular air, through the hollow shaft (8) is provided in order to cool the rotor (6), **characterized in that** the means (9) is formed or fastened on an inner side (14) of the hollow shaft (8) and is designed as blades (12), a thread (15) or a worm (16).

2. Electric machine according to Claim 1, **characterized in that** the thread (15) or the worm (16) or the at least one blade (12) is formed integrally with the hollow shaft (8).

3. Electric machine according to Claim 1, **characterized in that** the hollow axle (7) or hollow shaft (8) is equipped on the inside with cooling fins (17).

4. Electric machine according to Claim 1, **characterized in that** the hollow shaft (8) functions as an impeller (11), and the at least one blade (12) is designed as blades of a turbomachine.

## Revendications

1. Machine électrique (4), en particulier pour l'entraînement d'un véhicule automobile (2), comprenant un arbre creux (8) et au moins un rotor (6) disposé au niveau de l'arbre creux (8) et au moins un stator fixe (5) disposé autour du rotor (6), au moins un moyen (9) étant prévu pour refouler un fluide de refroidissement, en particulier de l'air, à travers l'arbre creux (8), afin de refroidir le rotor (6), **caractérisée en ce que** le moyen (9) est réalisé ou fixé au niveau d'un côté intérieur (14) de l'arbre creux (8) et est réalisé sous forme de pale (12), de filetage (15) ou de vis sans fin (16).

2. Machine électrique selon la revendication 1, **caractérisée en ce que** le filetage (15) ou la vis sans fin (16) ou l'au moins une pale (12) est réalisé(e) d'une seule pièce avec l'arbre creux (8).

3. Machine électrique selon la revendication 1, **caractérisée en ce que** l'axe creux (7) ou l'arbre creux (8) est pourvu du côté intérieur d'ailettes de refroidissement (17).

4. Machine électrique selon la revendication 1, **caractérisée en ce que** l'arbre creux (8) sert de roue mobile (11) et l'au moins une pale (12) est réalisée sous forme de pale d'une turbomachine.
